Europäisches Patentamt

European Patent Office

Office européen des brevets

(11) Veröffentlichungsnummer: **0 249 704 B1**

(12) **EUROPÄISCHE PATENTSCHRIFT**

(45) Veröffentlichungstag der Patentschrift: **04.03.92**

(51) Int. Cl.⁵: **B23Q 5/04**

(21) Anmeldenummer: **87105314.6**

(22) Anmeldetag: **10.04.87**

(54) **Spindelkopf.**

(30) Priorität: **20.06.86 DE 8616485 U**

(43) Veröffentlichungstag der Anmeldung:
**23.12.87 Patentblatt 87/52**

(45) Bekanntmachung des Hinweises auf die
Patenterteilung:
**04.03.92 Patentblatt 92/10**

(84) Benannte Vertragsstaaten:
**AT CH DE ES FR GB IT LI SE**

(56) Entgegenhaltungen:
**DE-A- 3 128 228**
**US-A- 3 069 931**

(73) Patentinhaber: **Sauter Feinmechanik GmbH
Carl-Zeiss-Strasse 7
W-7430 Metzingen(DE)**

(72) Erfinder: **Thumm, Helmut, Dipl.-Ing. (FH)
Steinerweg 37
W-7430 Metzingen(DE)**

(74) Vertreter: **Patentanwälte Phys. Bartels
Dipl.-Ing. Fink Dr.-Ing. Held
Lange Strasse 51
W-7000 Stuttgart 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Spindelkopf für modulare Werkzeuge, welcher die Merkmale des Oberbegriffs des Anspruches 1 aufweist.

In der Regel sind bei Spindelköpfen die Antriebswelle mit der Abtriebswelle sowie die Hilfswelle mit der Betätigungswelle je einstückig ausgebildet. Der Antrieb liegt dabei also gleichachsig zum Werkzeug. Es ist jedoch auch ein Spindelkopf der eingangs genannten Art für modulare Werkzeuge bekannt (EP-A-0 193 876), bei dem die Antriebswelle und die in ihr drehbar gelagerte Hilfswelle im rechten Winkel zur Abtriebswelle und der in dieser gelagerten Betätigungswelle angeordnet sind. Für die Getriebeverbindung zwischen der Antriebswelle und der Abtriebswelle genügt hierbei ein einfaches Winkelgetriebe. Hingegen ist die Getriebeverbindung zwischen der Betätigungswelle und der Hilfswelle aufwendig, da hierzu ein Durchgriff durch die hohle Abtriebswelle notwendig ist. Außerdem bedingt diese Getriebeverbindung einen relativ großen Überstand der Spannvorrichtung über die Antriebswelle quer zu deren Längserstrekkung, was die Einsatzmöglichkeiten diese bekannten Spindelkopfes beeinträchtigt.

Gegenstand der Erfindung ist ein Spindelkopf mit den Merkmalen des Anspruches 1. Ein derartiger abgewinkelter Spindelkopf ermöglicht in einfacher Weise eine Anordnung der Antriebswelle und der Abtriebswelle derart, daß letztere nur wenig über die Antriebswelle quer zu deren Längsrichtung übersteht, nämlich im Grenzfall um die Wandstärke des die Antriebswelle enthaltenden Gehäuses. Ferner ist bei der erfindungsgemäßen Lösung keine aufwendige Getriebeverbindung erforderlich, obwohl die bei Spindelköpfen übliche Anordnung der Hilfswelle in der Antriebswelle beibehalten ist. Erreicht werden diese Vorteile, dadurch, daß die Betätigungswelle ebenso wie die Abtriebswelle an dem der Spannvorrichtung abgekehrten Ende über je eines der beiden Winkelgetriebe mit einer ersten bzw. zweiten Zwischenwelle gekoppelt sind und letztere wiederum über eine dritte, gegen die Spannvorrichtung versetzt angeordnete Zwischenwelle sowie ein auf dieser laufendes Stirnrad mit der Antriebswelle bzw. der Hilfswelle, die beide in derselben Richtung wie die dritte Zwischenwelle gegen das offene Ende der Spannvorrichtung versetzt sind, in Getriebeverbindung stehen. Ein Durchgriff durch eine Hohlwelle ist also nicht erforderlich.

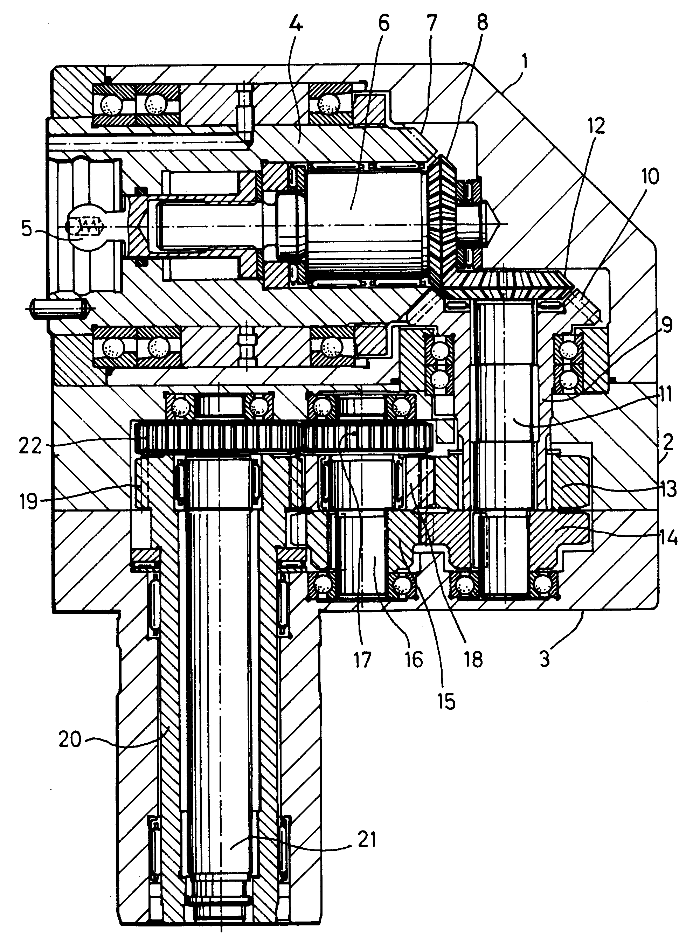

Im folgenden ist die Erfindung anhand eines in der Zeichnung dargestellten Ausführungsbeispiels im einzelnen erläutert. Die einzige Figur zeigt in schematischer Darstellung einen Längsschnitt des Ausführungsbeispiels.

Ein Spindelkopf für in bekannter Weise ausgebildete und daher nicht dargestellte modulare Wechselwerkzeuge weist ein geteiltes, metallisches Gehäuse auf. Zwischen einem ersten Teil 1 und einem dritten Teil 3 ist ein zweiter Teil 2 angeordnet, die miteinander verschraubt sind. Im ersten Teil 1 ist eine hohle Abtriebswelle 4 gelagert, die an ihrem einen, von der offenen Seite des ersten Gehäuseteils 1 zugänglichen Ende eine in bekannter Weise ausgebildete Aufnahme für modulare Wechselwerkzeuge aufweist. In diese Aufnahme hinein ragt ein in der Abtriebswelle 4 axial verschiebbar gelagertes Spannelement 5, das ebenfalls in bekannter Weise ausgebildet ist. Das Spannelement ist mit einer axialen Gewindebohrung versehen, in die ein Gewindezapfen einer Betätigungswelle 6 eingreift, welche drehbar in der Abtriebswelle 4 gelagert ist. Ein Drehen der Batätigungswelle 6 relativ zur Abtriebswelle 4 hat daher eine Längsverschiebung des Spannelementes 5 zur Folge.

An dem der Aufnahme für die Wechselwerkzeuge abgekehrten Ende weisen sowohl die Abtriebswelle 4 als auch die Betätigungswelle 6 ein Kegelrad 7 beziehungsweise 8 mit einem Winkel von 45 Grad auf. Das Kegelrad 7 kämmt mit einem am einen Ende einer ersten Zwischenwelle 9 vorgesehenen Kegelrad 10, das Kegelrad 8 mit einem am einen Ende einer zweiten Zwischenwelle 11 vorgesehenen Kegelrad 12. Die erste Zwischenwelle 9 ist eine Hohlwelle für die drehbare Aufnahme der zweiten Zwischenwelle 11 ausgebildet und im ersten Teil 1 des Gehäuses gelagert, aus dem heraus sie jedoch sich in den zweiten Teil 2 hinein erstreckt. Die zweite Zwischenwelle 11 steht über das ein Stirnrad 13 tragende Ende der ersten Zwischenwelle über und ist hier im dritten Teil 3 des Gehäuses drehbar gelagert. Dieser überstehende Endabschnitt der zweiten Zwischenwelle 11 trägt ein fest mit ihm verbundenes Stirnrad 14, das axial neben dem Stirnrad 13 der ersten Zwischenwelle 9 angeordnet ist.

Mit dem Stirnrad 14 kämmt ein Stirnrad 15, das fest auf einer dritten Zwischenwelle 16 sitzt, welche in Längsrichtung der Abtriebswelle 4 gegen deren die Werkzeugaufnahme bildendes Ende versetzt parallel zu der ersten und zweiten Zwischenwelle angeordnet ist und zwar derart, daß ihre Längsachse in der durch die Längsachsen der Abtriebswelle 4 und der ersten Zwischenwelle 9 definierten Ebene liegt. Der das Stirnrad 15 tragende Endabschnitt der dritten Zwischenwelle ist drehbar im dritten Teil 3 des Gehäuses, der andere Endabschnitt, auf dem ebenfalls fest ein Stirnrad 17 angeordnet ist, drehbar im zweiten Teil 2 des Gehäuses gelagert. Der Abschnitt der dritten Zwischenwelle 16 zwischen den beiden Stirnrädern 15 und 17 trägt ein Lager, auf dem drehbar ein zusätzliches Stirnrad 18 gelagert ist, welches mit dem Stirnrad 13 der ersten Zwischenwelle 9 kämmt.

Mit dem zusätzlichen Stirnrad 18 steht ein Stirnrad 19 in Eingriff, welches am einen Ende einer hohlen Antriebswelle 20 vorgesehen ist, welche gegenüber der dritten Zwischenwelle 3 in derselben Richtung wie diese gegenüber der ersten und zweiten Zwischenwelle versetzt ist. Die Längsachse der parallel zu den Zwischenwellen liegenden Antriebswelle 20 liegt in der gleichen Ebene wie die Längsachsen der übrigen Wellen.

Die Antriebswelle 20 nimmt in bekannter Weise drehbar eine Hilfswelle 21 auf, welche über das das Stirnrad 19 tragende Ende der Antriebswelle 20 übersteht und hier drehbar im zweiten Teil 2 des Gehäuses gelagert ist. Auf diesem Endabschnitt ist ein Stirnrad 22 angordnet, das in Eingriff mit dem Stirnrad 17 der dritten Zwischenwelle 16 steht.

Ein zylindrischer Ansatz des dritten Teils 3 des Gehäuses umgibt die Antriebswelle 20 und nimmt deren Lager auf.

## Patentansprüche

1. Spindelkopf für modulare Wechselwerkzeuge mit einem Gehäuse, in dem drehbar eine hohle Antriebswelle und eine von dieser antreibbare hohle Abtriebswelle einer das Werkzeug drehfest erfassenden Spannvorrichtung gelagert sind, sowie mit einer in der Abtriebswelle (4) drehbar gelagerten Betätigungswelle (6), die mittels einer in der Antriebswelle (20) drehbar gelagerten Hilfswelle (21)antreibbar ist, wobei die Antriebswelle (20) und die Hilfswelle (21) im rechten Winkel zur Abtriebswelle (4) und zur Betätigungswelle (6) angeordnet und mit letzteren über je ein Winkelgetriebe (7, 10; 8, 12) in Getriebeverbindung stehen, dadurch gekennzeichnet, daß

   a) die Abtriebswelle (4) und die Betätigungswelle (6) an ihrem der Spannvorrichtung abgekehrten Ende mittels der beiden Winkelgetriebe (7, 10; 8, 12) mit einer parallel zur Antriebswelle (20) liegenden ersten beziehungsweise zweiten Zwischenwelle (9, 11) verbunden sind, von denen die zweite Zwischenwelle (11) die erste Zwischenwelle (9) durchdringt,
   b) sowohl die erste als auch die zweite Zwischenwelle (9, 11) je ein drehfest mit ihnen verbundenes Stirnrad (13, 14) tragen,
   c) das Stirnrad (13) der ersten Zwischenwelle (9) über ein zusätzliches Stirnrad (18) mit einem drehfest auf der Antriebswelle (20) angeordneten Stirnrad (19) und das Stirnrad (14) der zweiten Zwischenwelle (11) über eine zu ihr parallele dritte Zwischenwelle (16) mitStirnrädern (15,17) mit einem fest auf der Hilfswelle (21) angeordneten Stirnrad (22) in Getriebeverbindung stehen, und
d) die Antriebswelle (20) und die dritte Zwischenwelle (16) achsparallel zur ersten Zwischenwelle (9) in Längsrichtung der Abtriebswelle (4) gegen deren der Werkzeugaufnahme dienendes Ende hin versetzt im Gehäuse (1,2,3) angeordnet sind und die Größe dieses Versatzes der Antriebswelle (20) sowie die axiale Länge der Abtriebswelle (4) aufeinander entsprechende einem möglichst kleinen Überstand der Abtriebswelle (4) in ihrer Längsrichtung über die Antriebswelle (21) abgestimmt sind.

2. Spindelkopf nach Anspruch 1, dadurch gekennzeichnet, daß die zwischen der zweiten Zwischenwelle (11) und der Hilfswelle (21) drehbar im Gehäuse (1, 2, 3) gelagerte dritte Zwischenwelle (16) das zusätzliche Stirnrad (18) durchdringt und für dieses einen Lagerzapfen bildet.

## Claims

1. Spindle head for modular interchangeable tools with a housing, in which are mounted to rotate a hollow drive shaft and a hollow output shaft of a chuck engaging the tool in a non-rotary manner, which output shaft may be driven by the drive shaft, and with an actuating shaft (6) mounted to rotate in the output shaft (4), which actuating shaft can be driven by means of an auxiliary shaft (21) mounted to rotate in the drive shaft (20), the drive shaft (20) and the auxiliary shaft (21) being disposed at right angles to the output shaft (4) and to the actuating shaft (6) and being in geared connection with the latter in each case by way of mitre gearing (7, 10; 8, 12), characterised in that

   a) at their end remote from the chuck, the output shaft (4) and the actuating shaft (6) are connected by means of the two mitre gears (7, 10; 8, 12) to a first respectively second intermediate shaft (9, 11) lying parallel to the drive shaft (20), of which the second intermediate shaft (11) penetrates the first intermediate shaft (9),
   b) both the first as well as the second intermediate shaft (9, 11) respectively support a spur wheel (13, 14) connected thereto in an non-rotary manner,
   c) the spur wheel (13) of the first intermediate shaft (9) is in geared connection by way of an additional spur wheel (18) with a spur wheel (19) disposed in a non-rotary manner on the drive shaft (20) and the spur wheel (14) of the second intermediate shaft (11) is in geared connection by way of a third intermediate shaft (16) parallel thereto with spur wheels (15, 17) with a spur wheel (22) fixed on the auxiliary shaft (21), and

d) the drive shaft (20) and the third intermediate shaft (16) are arranged axis parallel to the first intermediate shaft (9) in the longitudinal direction of the output shaft (4) offset towards its end serving to receive the tool, in the housing (1, 2, 3) and the size of this offset of the drive shaft (20) as well as the axial length of the output shaft (4) corresponding to each other are coordinated with the smallest possible projection of the output shaft (4) in its longitudinal direction beyond the drive shaft (21).

2. Spindle head according to Claim 1, characterised in that the third intermediate shaft (16) mounted to rotate in the housing (1, 2, 3) between the second intermediate shaft (11) and the auxiliary shaft (21) penetrates the additional spur wheel (18) and forms a journal for the latter.

**Revendications**

1. Tête de broche pour outils d'usinage interchangeables comportant un carter ou une enveloppe dans lequel sont montés à rotation un arbre de transmission creux et un arbre de sortie ou de transmission creux entraîné par celui-ci, ainsi qu'un arbre d'actionnement (6), monté à rotation dans l'arbre de sortie (4), qui peut être actionné au moyen d'un arbre auxiliaire (21) monté à rotation dans l'arbre de transmission (20), la disposition étant telle que l'arbre de transmission (20) et l'arbre auxiliaire (21) font un angle droit avec l'arbre de sortie (4) et avec l'arbre d'actionnement (6), et sont en liaison cinématique avec ce dernier respectivement par l'intermédiaire d'un engrenage d'angle (7, 10; 8, 12), caractérisée en ce que:

a) l'arbre de sortie (4) et l'arbre d'actionnement (6) sont reliés, à leur extrémité située à l'opposé du dispositif de serrage, aux moyens de deux engrenages angulaires (7, 10; 8, 12), à un premier ou éventuellement, second, arbre intermédiaire (9, 11), s'étendant parallèlement au premier arbre de transmission ou moteur (20), la disposition étant telle que le second arbre intermédiaire (11) traverse le premier (9),

b) sur le second arbre intermédiaire (9, 11), ainsi que sur le premier sont fixés respectivement, solidaires en rotation, un pignon à denture droite (13,14),

c) le pignon droit (13) du premier arbre intermédiaire (9) est relié, par l'intermédiaire d'un pignon droit auxiliaire (18), à une roue à denture droite (19) solidaire de l'arbre de transmission (20), tandis que le pignon droit (14) du second arbre intermédiaire (11) est en liaison cinématique, par un troisième arbre intermédiaire (16), parallèle à celui-ci, comportant des pignons droits (15, 17), avec un pignon (22) solidaire de l'arbre auxiliaire (21),

d) et en ce que l'arbre de transmission (20) et le troisième arbre intermédiaire (16) sont décalés, parallèlement à leurs axes, par rapport au premier arbre intermédiaire (9) dans la direction de l'axe longitudinal de l'arbre de sortie (4), vers leur extrémité recevant les outils, dans le carter (1,2,3), la grandeur de ce décalage de l'arbre de transmission (20), ainsi que la longueur axiale de l'arbre de sortie (4) étant calculés pour assurer un dépassement minimal de l'arbre de sortie (21) dans le sens longitudinal.

2. Tête de broche selon la revendication 1, caractérisée en ce que, le troisième arbre intermédiaire (16), monté à rotation dans le carter (1, 2, 3) entre le second arbre intermédiaire (11) et l'arbre auxiliaire (21) traverse le pignon droit auxiliaire (18) et constitue un tourillon de montage pour celui-ci.